(19) Europäisches Patentamt
European Patent Office
Office européen des brevets

(11) Veröffentlichungsnummer : **0 123 197**
**B1**

(12) # EUROPÄISCHE PATENTSCHRIFT

(45) Veröffentlichungstag der Patentschrift : **23.12.87**

(51) Int. Cl.⁴ : **A 47 J 27/092**, A 47 J 45/07

(21) Anmeldenummer : **84103968.8**

(22) Anmeldetag : **09.04.84**

(54) **Topfdeckel mit lösbarem Griff.**

(30) Priorität : **20.04.83 DE 3314346**

(43) Veröffentlichungstag der Anmeldung : **31.10.84 Patentblatt 84/44**

(45) Bekanntmachung des Hinweises auf die Patenterteilung : **23.12.87 Patentblatt 87/52**

(84) Benannte Vertragsstaaten : **AT BE CH DE FR GB IT LI LU NL SE**

(56) Entgegenhaltungen :
EP-A- 0 032 406
DE-A- 2 611 713
DE-A- 2 712 636
DE-A- 3 027 064
FR-A- 2 248 007

(73) Patentinhaber : **WÜRTTEMBERGISCHE METALLWARENFABRIK AG.**
**Postfach 76**
**D-7340 Geislingen/Steige (DE)**

(72) Erfinder : **Bauer, Ewald**
**Franzosenweg 10**
**D-7340 Geislingen/Steige (DE)**
Erfinder : **Krejza, Jürgen**
**Goethestrasse 8**
**D-7343 Kuchen (DE)**

(74) Vertreter : **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 123 197 B1**

**Beschreibung**

Die Erfindung betrifft einen Topfdeckel nach dem Oberbegriff des Anspruches 1.

Verbindungen zwischen Topfdeckeln und Griffen gibt es in zahlreichen Ausführungen. In den meisten Fällen ist der Deckelgriff fest am Deckel angebracht, so daß er nur gewaltsam, gegebenenfalls unter Zerstörung, abnehmbar ist. Für Deckel, bei denen ein beschädigter Griff auswechsel- bzw. ersetzbar sein soll, ist als lösbare Befestigung einer Schraubverbindung bekannt. Beispiele hierfür sind die Deckel für Dampfdruckkochtöpfe, deren Stielgriffe mit den Topfgriffen zusammenwirkende Verriegelungsorgane tragen, die ein Öffnen des unter Druck stehenden Topfes verhindern sollen. Ein mittels eines Gewindebolzens und einer Mutter an einem Topfdeckel befestigbarer Griff Für einen Dampfdruckkochtopf ist aus der DE-A-3 002 204 bekannt. Dieser Griff soll jedoch nicht nur im Notfall, beim Auswechseln, abgenommen werden können, sondern bei jedem Reinigungsvorgang. Der Griff enthält Überwachungsorgane für den Kochvorgang, wie Druckanzeige und/oder Sicherheitsventil und/oder Temperaturanzeige. Diese Organe sind in dem den Dekkel teilweise übergreifenden Griff wenigstens zum Topfinneren abgedichteten Hohlräumen so untergebracht, daß eine Reinigung des abgenommenen Griffes auf einfache Weise möglich ist und auch die Dichtflächen der Hohlräume erfaßt. Während also die Reinigung keinerlei Schwierigkeiten bietet, muß zum Abnehmen des Griffes die Schraubverbindung gelöst werden. Leider hat sich gezeigt, daß es Hausfrauen gibt, die sich dadurch von der ausführlichen und gründlichen Reinigung des Bereiches zwischen Deckel und Griff abhalten lassen. Es handelt sich dabei nicht um die kleine Mühe die Mutter zu lösen, sondern eine Abneigung gegen « technische Tätigkeiten ». Dazu kommt die Befürchtung, die gelöste Verbindung nicht wieder herstellen zu können, die Mutter zu verlieren und/oder auch eine gelegentlich zu fest aufgedrehte Mutter. Eine mangelhafte Reinigung des Bereiches zwischen Deckel und den Überwachungsorganen beeinträchtigt jedoch mit der Zeit deren Funktionsfähigkeit und damit die Funktions und Sicherheit des Topfes.

Aufgabe der Erfindung ist es, einen Topfdeckel der eingangs beschriebenen Art zu schaffen, dessen Griff auch von technisch unbewanderten Personen rasch und sicher abnehm- und wieder aufsetzbar ist.

Die Aufgabe wird erfindungsgemäß durch die Merkmale des Anspruches 1 gelöst.

Die neue Befestigungsart ist rasch und einfach zu bedienen. Es muß kein Teil gesondert gelöst werden, der Griff ist als Ganzes unverändert vom Deckel abnehmbar, der seinerseits ebenfalls nicht verändert wird. Ein Werkzeug wird weder benötigt, noch wird der Gedanke an die Notwendigkeit eines Werkzeuges nahegelegt. Vielmehr weist die Ausbildung der Verbindungsorgane direkt auf eine häufige Handhabung und damit die Notwendigkeit der Reinigung hin.

Bei Dampfdruckkochtöpfen sind zusätzlich zu den Überwachungsorganen Sicherheitsvorrichtungen bekannt, die verhindern, daß der Deckel vom Topf gelöst wird, solange im Topf Überdruck herrscht. Es handelt sich dabei um Verriegelungselemente zwischen dem Topf- und dem Deckelgriff, wobei sich der Druck überhaupt nur aufbauen kann, wenn beide Griffe übereinanderstehen. Es ist unwahrscheinlich, daß jemand versucht den Griff vom Topfdeckel zu lösen, während im Topf Überdruck herrscht. Trotzdem ist eine Sicherung für diesen Fall erwünscht. Sie wird in vorteilhaft einfacher Form durch das Merkmal des Anspruches 2 geliefert.

Die Platzierung der Eingriffsöffnungen und Vorsprünge am Deckel bzw. am Griff, ist vorteilhaft im Hinblick sowohl auf die einfache Herstellung als auch für eine problemlose Handhabung. Ein Griff, der Überwachungsorgane enthält, muß die Deckelfläche irgendwo übergreifen. Befestigungsorgane in diesen bereichen sind damit für den sicheren Sitz besonders günstig.

Eine bevorzugte Ausführungsform ist durch das Merkmal des Anspruches 3 gekennzeichnet. Ein beim Anbringen des Deckels einrastender Schnappverschluß signalisiert der Bedienungsperson deutlich den richtigen Sitz des Griffes am Deckel. Außerdem werden Schnappverschlüsse als alltäglich, nicht als technisches Problem empfunden.

Die Ansprüche 4 und 5 betreffen wirtschaftlich herstellbare und leicht zu bedienende Ausführungsformen des Schnappverschlusses. Insbesondere wird durch das Unterbringen der Feder in einer mit der Nase einstückigen Hülse eine im Hinblick auf das Reinigen des Griffes erwünschte Abgeschlossenheit erzielt.

Die Ansprüche 6 bis 9 betreffen die Befestigungsorgane zwischen Griff und Deckel im mittleren Bereich des Deckels.

Die Merkmale der Ansprüche 10 und 11 betreffen eine Ausführungsform, die wirtschaftlich herstellbar ist. Besonders günstig im Gebrauch ist das geringe Gewicht bei gleichzeitig guten Festigkeitseigenschaften. Im Gegensatz zu einem reinen Kunststoffgriff ist die Metallplatine auch bei Sonderbeanspruchungen, wie fallenlassen des Griffes oder Deckels oder extremen Überdruck im Topf nicht zerstörbar. Unfälle sind dadurch ausgeschlossen. Die Überwachungsorgane sind in der Metallplatine einfach anzubringen und durch diese sicher gehaltert. Ferner kann das Kunststoffgehäuseteil in seiner Form sowohl den Anforderungen an das Herstellungsverfahren, als auch an praktische und ästhetische Ansprüche angepaßt werden. Es ist bei einer Beschädigung auf einfache Weise zu ersetzen.

Eine zusätzliche Sicherung sieht eine durch den Anspruch 12 gekennzeichnete Weiterbildung der Erfindung vor Solange das Sicherheitsventil nicht schließen kann ist ein Druckaufbau im Topf nicht möglich. Ein ungenügend befestigter Deckelgriff kann also nicht Ursache eines Unfalles werden. Umgekehrt besteht keine Möglichkeit, den Deckelgriff unachtsam zu lösen, ohne vorher den Überdruck im Deckel abzubauen.

Weitere Einzelheiten und Vorteile der Erfindung gehen aus der nachstehenden Beschreibung von Ausführungsbeispielen erfindungsgemäßer Topfdeckel hervor, die in den Zeichnungen dargestellt sind. Es zeigen :

Fig. 1 einen Teilbereich eines Dampfdruck-Kochtopfes mit Deckel und Griff,

Fig. 2 eine Draufsicht auf den Topfgriff nach Fig. 1,

Fig. 3 einen Schnitt durch einen Teilbereich einer anderen Ausführungsform eines Topfdeckels.

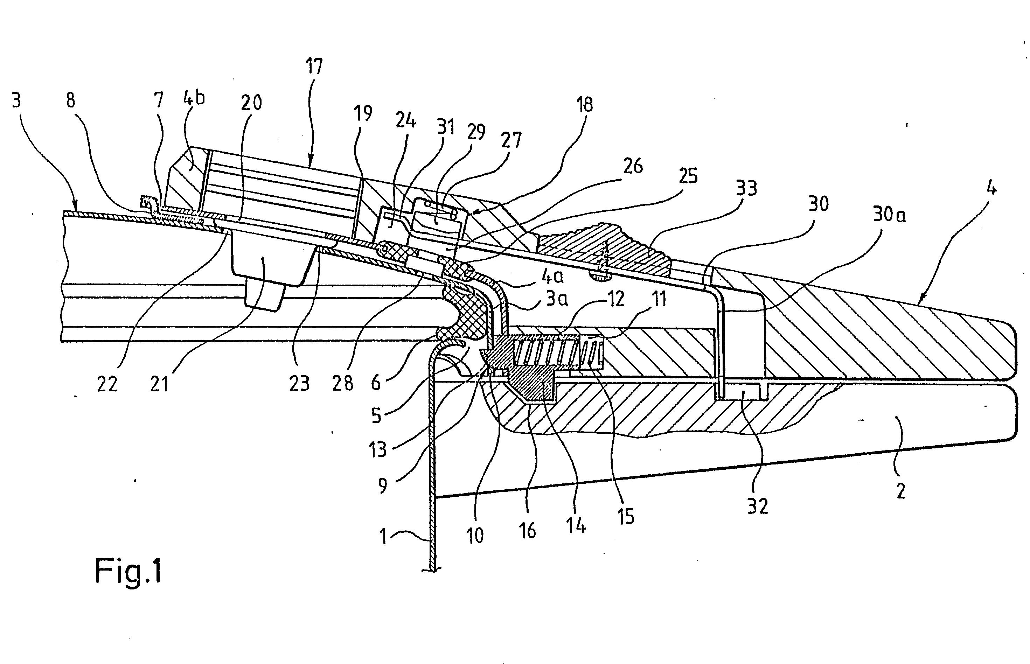

In Fig. 1 ist ein Topf 1 durch einen Teil seiner Wandung und seinen Griff 2 angedeutet. Ihm ist ein ebenfalls nur teilweise dargestellter Deckel 3 zugeordnet mit einem als Ganzes mit 4 bezeichneten Deckelgriff. Fig. 1 zeigt die Druckkochstellung wobei sich der Topfgriff 2 und der Deckelgriff 4 übereinander befinden. In dieser Stellung sind Topf und Deckel gegeneinander durch einen Bajonettverschluß bildende Randabschnitte 5 verriegelt und mittels einer Lippendichtung 6 abgedichtet.

Der Deckelgriff 4 besteht im wesentlichen aus einer Metallplatine 4a, die einen Teil seiner unteren Fläche bildet, und einem die Metallplatine seitlich nach oben abdeckenden Kunststoffgehäuseteil 4b. Während das Kunststoffgehäuseteil 4b das zum Erfassen des Griffes dienende Ende aufweist und im übrigen dem Griff Form und Aussehen gibt, stellt die Metallplatine den tragenden Kern des Griffes dar und die Halterung für den wesentlichen Teil der im Griff untergebrachten Organe.

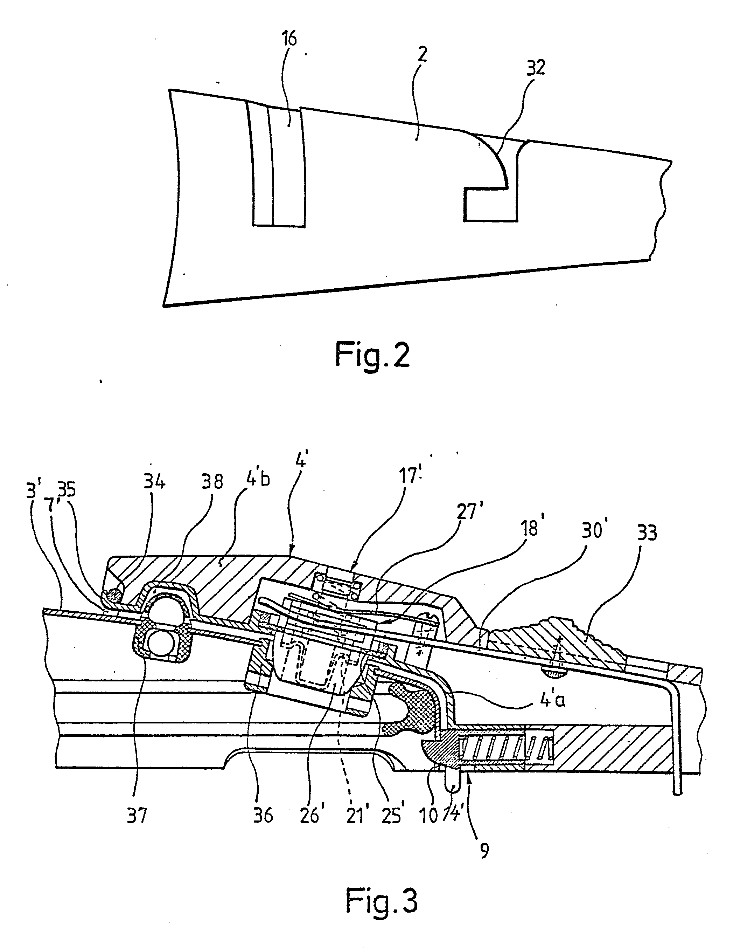

Der Deckelgriff 4 ist am Deckel 3 an zwei Stellen lösbar gehaltert : am Ende des den Deckel übergreifenden Griffteils ist in der Metallplatine 4a eine Ausnehmung 7 angebracht, die eine am Deckel befestigte Winkellasche 8 übergreift. Am sich etwa parallel zur Topfwand erstreckenden Rand 3a des Deckels besteht die Verbindung aus einem als Ganzes mit 9 bezeichneten Schnappverschluß. Der Deckelrand 3a weist eine Ausnehmung 10 auf. Im Kunststoffgehäuseteil 4b des Dekkelgriffes 4 ist in einem Hohlraum 11 eine Hülse 12 umtergebracht. Ihr geschlossenes Ende ist dem Deckel zugewandt und trägt eine Nase 13, die aus dem Griff in Richtung auf den Deckel vorsteht. Ferner ist an der Hülse 12 ein Ansatz 14 so angeordnet, daß er etwa im rechten Winkel zur Nase 13 absteht. Eine Druckfeder 15 stützt sich einerseits in der Hülse 12, andererseits an der Innenwand des Hohlraumes 11 derart ab, daß sie die Hülse 12 nach außen und damit die Nase 13 in die Ausnehmung 10 am Dekkelrand 3a drückt. Um den Deckelgriff 4 am Deckel 2 anzubringen ist also zunächst die Ausnehmung 7 über das freie Ende der Winkellasche 8 zu führen, wozu der Deckelgriff leicht zur Deckeloberfläche geneigt angesetzt und anschließend in seiner Auflagestellung gedreht wird. Beim Erreichen der Normalstellung zwischen dem Griff und Deckel rastet die Nase 13 in die Ausnehmung 10 ein. Zum Lösen muß umgekehrt zuerst der Schnappverschluß 9 durch Zurückdrücken der Nase 13 gegen die Kraft der Feder 15 gelöst und anschließend kann der Deckelgriff unter leichtem Schwenken nach oben von der Winkellasche 8 abgehoben werden. Damit der Deckelgriff nicht versehentlich gelöst wird, während im Topfinneren Überdruck herrscht, und dadurch die nachstehend geschilderten Überwachungsorgane im Deckelgriff wirkungslos werden, wirkt der Ansatz 14 an der Hülse 12 mit einer Mulde 16 am Griff 2 des Topfes zusammen. Wie die in Fig. 2 teilweise dargestellte Oberfläche des Griffes 2 zeigt, erstreckt sich die Mulde von einer Seitenkante des Griffes 2 her über einen Teil seiner Oberfläche. Da die Stellung der beiden Griffe übereinander zum Druckaufbau erzwungen wird (siehe unten) ist auch die Blockierung der Griffbefestigung für diesen Fall gewährleistet.

Daß der Deckelgriff vom Deckel rasch und problemlos abnehmbar und ebenso einfach wieder befestigbar ist, bildet eine wesentliche Vorraussetzung für die Funktionsfähigkeit der im Deckelgriff untergebrachten Überwachungsorgane, in der Ausführung nach Fig. 1 ein Druckanzeiger 17 und ein Sicherheitsventil 18. Beide Einrichtungen sind vollständig und so in dem abgedichteten Deckelgriff angeordnet, daß die Dekkelunterseite ohne Gefahr für die Einrichtungen leicht zu reinigen ist, beispielsweise unter fließendem Wasser. Da für das Aufsetzen und Lösen des Deckelgriffes kein Werkzeug benötigt wird, besteht auch keine Gefahr, daß die Einrichtungen beschädigt werden. Gehaltert sind der Druckanzeiger 17 und das Sicherheitsventil 18 an der Metallplatine 4a.

Der Druckanzeiger 17 ist im Deckelgriff 4 in einem Hohlraum 19 mit einer Durchbrechung 20 an der Griffunterseite angeordnet. Beaufschlagt wird der Druckanzeiger 17 vom Dampfdruck über eine Rollmembran 21, die eine Öffnung 22 im Dekkel durchsetzt und zwischen Deckel und Deckelgriff einen dichtenden Kragen 23 bildet.

Das Sicherheitsventil 18 ist in einer Kammer 24 des Deckelgriffes 4 untergebracht, die über eine Membran 25 abgedichtet ist. Der Ventilkörper 26 besteht aus einem zylindrischen, teilweise hohlen Metallkörper, in dem eine Feder 27 gelagert ist und den Ventilkörper gegen eine Deckelöffnung 28 drückt und diese verschließt.

Dem Ventilkörper 26 sind Vorsprünge 29 angeformt, die mit einem Gestänge 30 zusammenwirken. Das Gestänge 30 verläuft im Bereich des Sicherheitsventiles gabelförmig mit Abkröpfungen 31. Das abgewinkelte Ende 30a des Gestänges 30 ragt im Abstand vom Deckel nach unten aus dem Griff heraus. Es bildet mit einer Führungskurve 32 auf der Oberseite des Topfgriffes 2 (Fig. 2) eine Verriegelungseinrichtung, die verhindert, daß der Deckel unfreiwillig gegenüber dem Topf verdreht wird, während im Topf Überdruck herrscht. Zur Druckreduzierung kann das Gestänge 30 mittels eines Handgriffes 33 verschoben werden. Die Abkröpfungen 31 heben über die Vorsprünge 29 dann den Ventilkörper 26 an. Der Druck kann durch die Deckelöffnung 28 abgebaut werden.

Fig. 3 zeigt den Abschnitt eines Deckels 3' mit einem Teil des zugehörigen Deckelgriffes 4'. Nachstehend werden die Unterschiede gegenüber Fig. 1 beschrieben, wobei einander entsprechende Teile gleiche Bezugszeichen mit einem Akzent aufweisen.

Zur Befestigung des Deckelgriffes ist an der Deckeloberseite ein Bügel 34 und an der Metallplatine 4a des Deckelgriffes 4' ein nach oben gekrümmter Haken 35 angebracht. Der Haken kann durch Schwenken des Deckelgriffes in eine vom Bügel gebildete Öffnung 7' hinein bzw. aus diesem heraus bewegt werden. Der Schnappverschluß 9 zwischen Deckelgriff und Deckel entspricht der bereits geschilderten Ausführung, lediglich der Ansatz 14' zur Verriegelung am hier nicht gezeichneten Topfdeckel ist etwas anders geformt.

Unterschiedlich sind auch die im Deckelgriff 4' untergebrachten an der Metallplatine 4a gehalterten Sicherheits- und Überwachungseinrichtungen : im Sicherheitsventil 18' ist der Druckanzeiger 17' integriert. Er wird durch eine Rollmembran 21' vollständig abgedichtet. Das Sicherheitsventil 18' ist im Handgriff 4' mittels der Membran 25' abgedichtet eingespannt. Der Ventilkörper 26' wird mittels einer Feder 27' hier als Blattfeder ausgebildet, auf einen Ventilsitz 36 gedrückt, der im Deckel untergebracht ist. Für den Druckabbau ist dem Ventilkörper 26' ein Gestänge 30' einer Fig. 1 entsprechenden Ausführung zugeordnet.

Ein Sicherheits- und Entlüftungsventil 37 mit einem elastischen Körper ist so in die Deckeloberfläche eingeknöpft, daß ein Teil über diese hinaussteht. Der Deckelgriff 4' übergreift diesen Teil mit einer entsprechenden Einwölbung 38. Dieses Entlüftungsventil bedarf keiner besonderen Wartung oder Abdichtung, kann also mit dem Deckel gereinigt werden.

Bei einer nicht in den Zeichnungen dargestellte Weiterbildung ist der Riegelverschluß 9 mit einer Verlängerung versehen, die mit dem abgewinkelten Ende 30a des Gestänges 30 wie folgt zusammenwirkt : Der Riegelverschluß kann nur geöffnet werden, wenn vorher das Sicherheitsventil 18 geöffnet wurde. Andernfalls bewegt die Verlängerung des Riegelverschlusses das abgewinkelte Ende 30a in Richtung Stielende. Andererseits kann das Sicherheitsventil 18 durch das Gestänge 30 nur dann verschlossen werden, wenn sich die Riegelvorrichtung 9 in ihrer Verriegelungsstellung befindet.

Im Rahmen der Erfindung können Einzelheiten der Sicherheits- und Überwachungseinrichtung, solange die Abdichtung gewährleistet ist, sowie des Schnappverschlusses und der Befestigungsstelle mit Ausnehmungen und Laschen, variieren.

**Patentansprüche**

1. Deckel (3) für einen Dampfdruckkochtopf (1), mit einem lösbar daran befestigten Griff (4), in welchem Überwachungsorgane (17, 18) abgedichtet untergebracht sind, wobei am Deckelgriff (4) und am Deckel (3) Vorsprünge (8 bzw. 35) und Eingriffsöffnungen (7 bzw. 7') angebracht sind, die miteinander in Eingriff bringbar und beim Abnehmen des Griffes voneinander lösbar sind, dadurch gekennzeichnet, daß wenigstens ein Vorsprung (13) als bewegliches Teil eines randnah angeordneten Riegelverschlusses (9) ausgebildet ist, der bei unter Druck stehendem Topf (1) unlösbar ist, und daß eine Eingriffsöffnung (7) bzw. ein Vorsprung (8) im Abstand vom Riegelverschluß (9) im mittleren Bereich des Deckels (3) angeordnet ist.

2. Deckel nach Anspruch 1, dadurch gekennzeichnet, daß am Vorsprung (13) des Deckelgriffes (4) ein in Richtung auf den Topfgriff (2) herausragender Ansatz (14) und am Topfgriff (2) eine Mulde (16) derart angeordnet sind, daß der Riegelverschluß (9) bei Druck im Topf nicht zu öffnen ist.

3. Deckel nach Anspruch 2, dadurch gekennzeichnet, daß der Riegelverschluß (9) als Schnappverschluß ausgebildet ist.

4. Deckel nach Anspruch 3, dadurch gekennzeichnet, daß der Schnappverschluß aus einer federbelastet im Deckelgriff (4) gelagerten Nase (13) und einer Ausnehmung (10) im Deckelrand (3a) besteht.

5. Deckel nach Anspruch 4, dadurch gekennzeichnet, daß die Nase (13) an einer eine Druckfeder (15) aufnehmenden Hülse (12) angeordnet und diese in einem das andere Federende abstützenden Hohlraum (11) im Deckelgriff (4) gelagert ist.

6. Deckel nach wenigstens einem der Ansprüche 3 bis 5, dadurch gekennzeichnet, daß an der Deckeloberseite ein Bügel (34) und an einem den Deckel (3') übergreifenden Griffende eine unter Drehen in die Öffnung (7') unter dem Bügel einführbare Lasche (35) angeordnet ist.

7. Deckel nach Anspruch 6, dadurch gekennzeichnet, daß die Breite der Lasche (35) kleiner als die Breite des Griffes (4') ist.

8. Deckel nach Anspruch 6 oder 7, dadurch gekennzeichnet, daß die Lasche (35) hakenartig gekrümmt ist.

9. Deckel nach einem der Ansprüche 3 bis 5, dadurch gekennzeichnet, daß am Deckel (3) eine Winkellasche (8) und am Deckelgriff (4) eine unter Drehen darüber bewegbare Ausnehmung (7) vorgesehen ist.

10. Deckel nach Anspruch 1, dadurch gekennzeichnet, daß der Deckelgriff (4 bzw. 4') eine die Überwachungsorgane (17, 18) halternde Metallplatine (4a bzw. 4'a) aufweist.

11. Deckel nach Anspruch 10, dadurch gekennzeichnet, daß die Metallplatine (4a bzw. 4'a) durch ein Kunststoffgehäuseteil (4b bzw. 4'b) wenigstens zur Deckeloberseite hin abgedeckt ist.

12. Deckel nach wenigstens einem der Ansprüche 1 bis 11, dadurch gekennzeichnet, daß der Riegelverschluß (9) einem Betätigungsorgan (30) für das öffnen und Schließen eines Sicherheitsventiles (18) derart zugeordnet ist, daß das Sicherheitsventil nur bei Verriegelungsstellung des Riegelverschlusses schließbar und der Riegelverschluß nur bei geöffnetem Sicherheitsventil lösbar ist.

**Claims**

1. Lid (3) for a steam-pressure cooking vessel (1), with a handle (4) releasably attached thereon in which monitoring members (17, 18) are accommodated in sealed manner, the lid handle (4) and the lid (3) comprising projections (8 and 35 resp.) and engagement openings (7 and 7′ resp.), which can be brought into engagement with one another and can be released from one another when removing the handle, characterized in that at least one projection (13) is designed as a movable part of a locking catch (9) which is arranged close to the edge and is undetachable when the cooking vessel (1) is under pressure, and that an engagement opening (7) or a projection (8) is arranged at a distance from the locking catch (9) in the central area of the lid (3).

2. Lid according to Claim 1, characterized in that, on the projection (13) of the lid handle (4), an extension (14) projecting in the direction of the cooking vessel handle (2), and, on the cooking vessel handle (2), a hollow (16) are arranged in such a way that the locking catch (9) cannot be opened when there is pressure in the cooking vessel.

3. Lid according to Claim 2, characterized in that the locking catch (9) is designed as a snap catch.

4. Lid according to Claim 3, characterized in that the snap catch consists of a nose (13), mounted in spring-loaded manner in the lid handle (4), and a recess (10) in the lid edge (3a).

5. Lid according to Claim 4, characterized in that the nose (13) is arranged on a sleeve (12) accommodating a compression spring (15), and the sleeve (12) is mounted in a hollow space (11) in the lid handle (4) supporting the other end of the spring.

6. Lid according to at least one of Claims 3 to 5, characterized in that a loop (34) is arranged on the upperside of the lid, and a tongue (35), which can be introduced into the opening (7′) beneath the loop while being turned, is arranged on an end of the handle overlapping the lid (3′).

7. Lid according to Claim 6, characterized in that the width of the tongue (35) is smaller than the width of the handle (4′).

8. Lid according to Claim 6 or 7, characterized in that the tongue (35) is curved hook-like.

9. Lid according to one of Claims 3 to 5, characterized in that an angular tongue (8) is provided on the lid (3), and a recess (7), which can be moved over the angular tongue (8) while being turned, is provided on the lid handle (4).

10. Lid according to Claim 1, characterized in that the lid handle (4 and 4′ resp.) has a metal plate (4a and 4′a resp.) holding the monitoring members (17, 18).

11. Lid according to Claim 10, characterized in that the metal plate (4a and 4′a resp.) is covered by a plastic housing part (4b and 4′b resp.) at least towards the upperside of the lid.

12. Lid according to at least one of Claims 1 to 11, characterized in that an actuating member (30) for opening and closing a safety valve (18) is allocated to the locking catch (9) in such a way that the safety valve can only be closed when the locking catch is in the interlocking position and the locking catch can only be released when the safety valve is open.

**Revendications**

1. Couvercle (3) pour vapocuiseur (1) doté d'une poignée détachable (4), dans laquelle sont logés des systèmes de contrôle (17, 18), des parties saillantes (8 et 35) et des orifices de fixation (7 et 7′) étant placés sur la poignée (4) et le couvercle (3), pouvant s'enclencher les unes dans les autres et détachables lors de l'enlèvement de la poignée, caractérisé en ce que au moins une partie saillante (13) constitue la partie mobile d'un bouchon de verrouillage (9) périphérique qui ne peut pas être détaché lorsque le récipient (1) est sous pression et en ce qu'un orifice de fixation (7) ou une partie saillante (8) est placé à distance du bouchon de verrouillage (9) dans la partie médiane du couvercle (3).

2. Couvercle selon la revendication 1, caractérisé en ce que, sur la partie saillante (13) de la poignée du couvercle (4), un épaulement (14) dépassant vers la poignée du récipient (2) et une cavité (16) pratiquée dans la poignée du couvercle (2) sont conçus de telle sorte que le bouchon de verrouillage (9) ne peut être débloqué que lorsque le récipient est sous pression.

3. Couvercle selon la revendication 2, caractérisé en ce qu'un bouchon à déclic constitue le bouchon de verrouillage (9).

4. Couvercle selon la revendication 3, caractérisé en ce que le bouchon à déclic se compose d'un becquet (13) actionné par ressort dans la poignée du couvercle (4) et d'une ouverture (10) pratiquée à la périphérie du couvercle (3a).

5. Couvercle selon la revendication 4, caractérisé en ce que le becquet (13) prolonge un fourreau (12) contenant un ressort à pression (15), le fourreau est logé dans un volume (11) ménagé dans la poignée du couvercle (4), au fond duquel prend appui l'autre extrémité du ressort.

6. Couvercle selon l'une quelconque des revendications 3 à 5, caractérisé en ce que, une traverse (34) étant montée sur la partie supérieure du couvercle, sur l'extrémité de la poignée recouvrant le couvercle (3′), une languette (35) peut s'introduire par rotation de la poignée dans l'ouverture (7′) sous la traverse.

7. Couvercle selon la revendication 6, caractérisé en ce que la largeur de la languette (35) est inférieure à celle de la poignée (4′).

8. Couvercle selon les revendications 6 ou 7, caractérisé en ce que la languette (35) a une forme de crochet recourbé.

9. Couvercle selon l'une quelconque des revendications 3 à 5, caractérisé en ce que il est prévu une languette coudée (8) sur le couvercle (3) et une ouverture (7) au bout de la poignée (4) s'engageant par rotation dans la languette coudée (8).

10. Couvercle selon la revendication 1, caractérisé en ce que la poignée du couvercle (4 et 4') présente une platine métallique (4a et 4'a) portant les systèmes de contrôle (17, 18).

11. Couvercle selon la revendication 10, caractérisé en ce que la platine métallique (4a et 4'a) est protégée par une pièce de boîtier en matière plastique (4b et 4'b) au moins jusqu'à la partie supérieure du couvercle.

12. Couvercle selon l'une quelconque des revendications 1 à 11, caractérisé en ce que le bouchon de verrouillage (9) et le système d'actionnement de l'ouverture et de la fermeture d'une soupape de sécurité (18) sont tels que la soupape de sécurité ne peut se fermer que lorsque le bouchon de verrouillage est bloqué, le bouchon de verrouillage ne pouvant être dégagé que lorsque la soupape de sécurité est ouverte.

4
2
30a
30
32
33
25
26
11
15
12
14
18
4a
3a
16
27
29
10
31
24
19
28
6
5
13
9
1
17
23
20
21
4b
7
22
8
3

Fig.1

16
2
32

Fig.2

3'
7'
35
34
38
4'b
4'
17'
27'
18'
30'
33
4'a
37
36
26'
21'
25'
10
14'
9

Fig.3